# EUROPEAN PATENT SPECIFICATION

(11) **EP 4 047 964 B1**
(45) Date of publication and mention of the grant of the patent: **02.08.2023**
(21) Application number: 22154369.7
(22) Date of filing: 31.01.2022
(51) Int. Cl.: H04W 4/44

(54) **VEHICLE TRAFFIC CONTROL COMMUNICATION SYSTEM**
FAHRZEUGVERKEHRSTEUERUNGSKOMMUNIKATIONSSYSTEM
SYSTÈME DE COMMUNICATION DE LA REGULATION DE LA CIRCULATION DE VÉHICULES

(30) Priority: 18.02.2021 US 202163150918 P; 18.11.2021 US 202117530315
(43) Date of publication of application: 24.08.2022
(73) Proprietor: Honeywell International Inc., Charlotte, NC 28202 (US)
(72) Inventor: DRISCOLL, Kevin Raymond, Charlotte, 28202 (US)
(74) Representative: Haseltine Lake Kempner LLP

(56) References cited:
- US-B1- 10 887 023
- US-B1- 10 925 114

## Description

### BACKGROUND

Urban air mobility (UAM) refers to urban transportation systems that move people by air. Such transportation systems developed in response to traffic congestion, as well as other factors, and will be implemented based on emerging air vehicle designs including personal air vehicles, and cargo and delivery drones. A urban transportation systems may comprise either autonomous or semi-autonomous air vehicles. While traditional Air Traffic Control (ATC) systems and protocols have been used to manage and coordinate the takeoff, flight, and landing activities of conventional aircraft for decades, they are not particularly well suited for UAM transportation systems. For example, at a given instance in time, there may be between 5-10 thousand aircraft in flight across the United States to be monitored by ATC stations. In comparison, an UAM transportation system for large metropolitan area may itself involve coordination of several thousand air vehicles. Moreover, whereas most traditional ATC controlled aircraft are well spaced and operate at high altitudes away from people and civic infrastructure, air vehicles in a UAM transportation system can be expected to operate between 400-4000ft in altitude and in close proximity to buildings and other air vehicles in UAM. As a consequence, UAM related communications UAM communications will be more safety and time critical than current aircraft communications, and may approach the need for continuous real time communications which are highly reliable and resilient to environmental challenges such as inadvertent interferences and accidental or intentional signal jamming, which can occur across all RF frequencies used for UAM communication (e.g., interference from broadband jammers, arching power lines, welders, etc.).

For the reasons stated above and for other reasons stated below which will become apparent to those skilled in the art upon reading and understanding the specification, there is a need in the art for a vehicle traffic control communication system.

US 1087023 describes a passenger vehicle optical communication system including a source vehicle which has a light source and an endpoint vehicle which has a camera. The source vehicle transmits a series of patterns using the light source to communicate with the endpoint vehicle.

### SUMMARY

The Embodiments of the present disclosure provide methods and systems for a vehicle traffic control communication system according to the claims and will be understood by reading and studying the following specification.

In one embodiment, a vehicle traffic control communications system is provided. The vehicle traffic control communications system comprises: a Radio Frequency, RF, communication subsystem infrastructure configured to communicate vehicle traffic control information between a vehicle and a vehicle traffic control system via at least one wireless RF communication link established between the RF communication subsystem infrastructure and the vehicle; and a laser communication subsystem infrastructure configured to communicate the vehicle traffic control information between the vehicle and the vehicle traffic control system via at least one wireless laser communication link established between the laser communication subsystem infrastructure and the vehicle, wherein laser communication subsystem infrastructure comprise a first plurality of nodes secured onto physical mounting structures distributed along a vehicle route between a departure point and a destination point for the vehicle.

### DRAWINGS

Embodiments of the present disclosure can be more easily understood and further advantages and uses thereof more readily apparent, when considered in view of the description of the preferred embodiments and the following figures in which:
Figure 1 is a diagram of an example vehicle traffic control communications system;
Figure 2 is a diagram of an example implementation of the vehicle traffic control communications system of Figure 1;
Figure 3 is a diagram of an example implementation of the vehicle traffic control communications system of Figure 1;
Figure 4 is a diagram of an example implementation of the vehicle traffic control communications system of Figure 1;
Figures 5 and 5A are diagrams of example communications nodes for use with a communications network vehicle traffic control communications system; and
Figures 6 and 6A are diagrams of an example vehicle embodiment for use with a communications network vehicle traffic control communications system.

In accordance with common practice, the various described features are not drawn to scale but are drawn to emphasize features relevant to the present disclosure. Reference characters denote like elements throughout figures and text.

### DETAILED DESCRIPTION

In the following detailed description, reference is made to the accompanying drawings that form a part hereof, and in which is shown by way of specific illustrative embodiments in which the embodiments may be practiced. These embodiments are described in sufficient detail to enable those skilled in the art to practice the embodiments, and it is to be understood that other embodiments may be utilized and that logical, mechanical and electrical changes may be made without departing from the scope of the present disclosure. The following detailed description is, therefore, not to be taken in a limiting sense.

Embodiments of the present disclosure address the communications needs for emerging UAM transportation systems by augmenting radio frequency (RF) communications with laser communications to provide dissimilar redundancy for UAM communications networks and vehicles. In other words, the embodiments presented herein utilize different modalities for communicating navigation and vehicle traffic control information between ground control system and UAM air vehicle so that if one modality is interrupted, the other remains available. For example, a UAM Vehicle-Ground Communication Infrastructure comprising a plurality of laser communication nodes may be installed on existing infrastructure (buildings, towers, signage, utility poles, lamp posts, and so forth) along intended flyways (for example, predesignated fixed routes). In some embodiments, the nodes may locally powered, such as from a power source available from the infrastructure on which they are mounted and utilize a communications medium, such as metallic wire cables, fiber-optic connections or wireless communications, to communicate with the UAM ground control system. In other embodiments, the nodes may operate as a self-configuring mesh network where only a subset of the total number of nodes are directly coupled to the UAM ground control system. In some embodiments, the RF communications component of the UAM Vehicle-Ground Communication Infrastructure may be provide by one or more wireless wideband service providers utilizing existing LTE cellular networks or 5G wireless access points, for example. In other embodiments, the laser communication nodes may further comprise RF transceiver circuitry to implement the RF communications component. RF interference won't affect laser communication and laser interference won't affect RF communication, thus eliminating any single point of failure in the media. Moreover, combining laser and RF communications components on infrastructure mounted nodes simplifies the creation of the UAM Vehicle-Ground communication infrastructure.

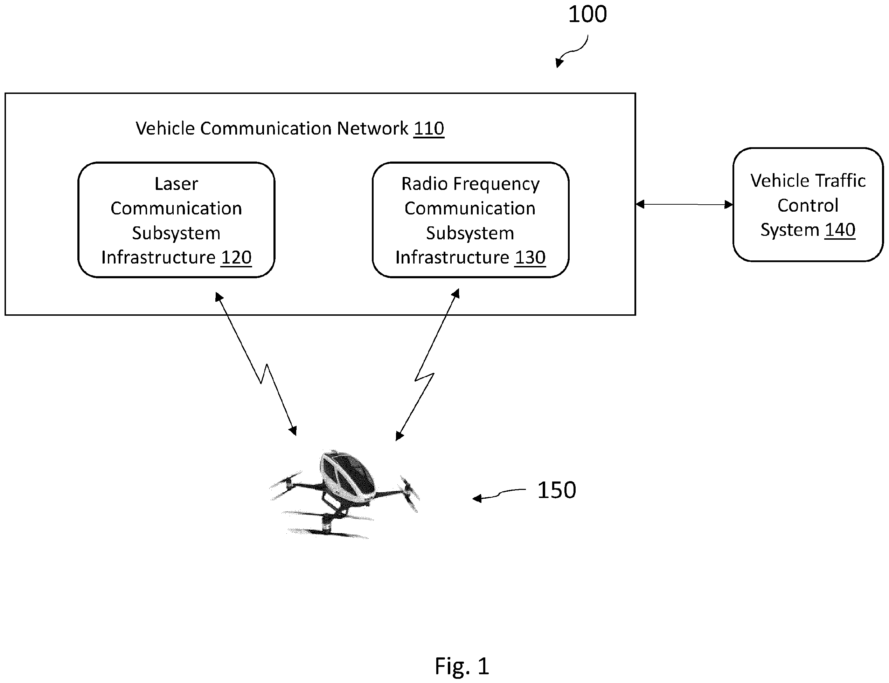

Figure 1 is a diagram illustrating a vehicle traffic control communications system 100 of one embodiment of the present disclosure. In the embodiment shown in Figure 1, the vehicle traffic control communications system 100 provides diversified wireless communication links 122 and 132 that communicatively couple a vehicle 150 to a vehicle traffic control system 140. In the particular embodiment illustrated in Figure 1, the vehicle 150 is illustrated as an UAM air vehicle such that system 100 functions as a UAM traffic control communication infrastructure. However, it should be understood that vehicle 150 is not so limited and in other embodiments may comprise any form of vehicle, such as a ground vehicle, whose movements are coordinated with other vehicles via the vehicle traffic control system 140.

As shown in Figure 1, the vehicle traffic control communication system 100 comprises a communications network 110 that includes at least two diverse communication subsystem infrastructures (shown at 120 and 130) providing wireless communication links 122 and 132 that communicatively couple the vehicle to the vehicle traffic control system 140. Specifically, the RF communication subsystem infrastructure 130 comprises the electronic components, including RF transmitters and receivers, amplifiers, antennas and associated signal processing circuits to establish the wireless RF communication link 132 with the vehicle 150 and transport vehicle traffic control information between the vehicle 150 and the vehicle traffic control system 140. The laser communication subsystem infrastructure 120 comprises the electronic components, including laser light transmitters and receivers and associated signal processing circuits to establish the wireless laser communication link 122 with the vehicle 150 and transport vehicle traffic control information between the vehicle 150 and the vehicle traffic control system 140. In operation in some embodiments, the vehicle control communication system 100 establishes redundant, but not necessarily duplicate, wireless communication links 122 and 132 with the vehicle 150 which supply resilient and reliable continuous real time communications to vehicles operating in dynamic and crowded environments such as air vehicles in UAM transportation systems. As previously mentioned, it is contemplated that a plurality, up to thousands, of vehicles such as vehicle 150 will simultaneously establish their independent communication links with the communications network 110 and exchange information with the vehicle traffic control system 140 to coordinate their movements and avoid traffic congestions and collisions. For example, the vehicle traffic control system 140 and the many vehicle 150 operating in the vehicle control communication system 100 can exchange vehicle traffic control information to dynamically coordinate the timing of vehicle departures from designated departure points, the timing of arrivals ad designated destination points, and the routing of vehicles 150 between the departure and destination points. The positions of each of the vehicles 150 can be reported back to the vehicle traffic control system 140 so that the velocity of vehicles 150 and their travel paths may be dynamically managed by the vehicle traffic control system 140 to avoid or mitigate traffic congestions and/or avoid emerging hazards. In some embodiments, the position and/or velocity of other vehicles or other hazards within a predetermined proximity of a vehicle 150 can be communicated to that vehicle 150 so that it can autonomously determine when it is necessary to deviate from traffic control information received from the vehicle traffic control system 140.

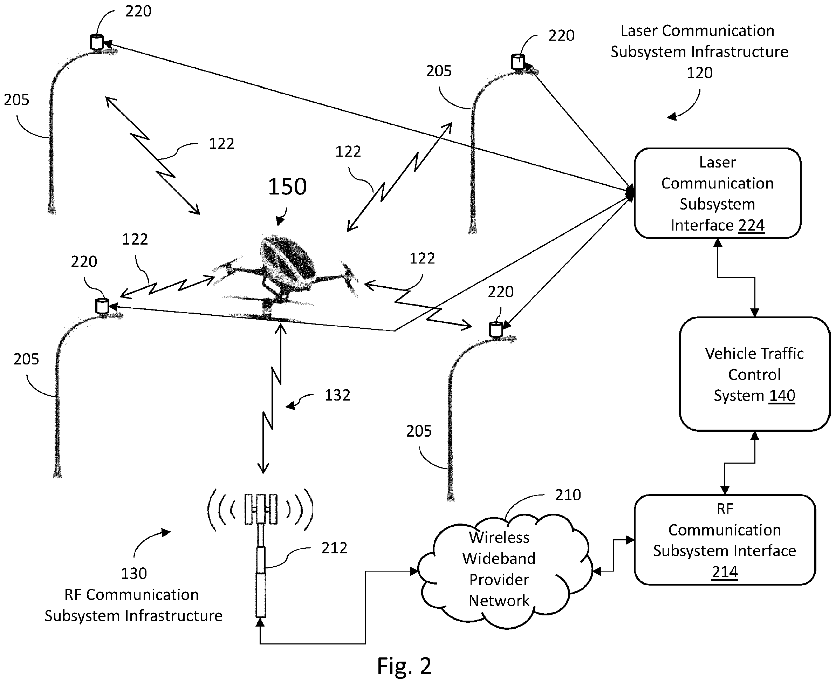

Figure 2 is a diagram illustrating one possible communications network 110 implementation for the laser and RF communication subsystem infrastructures 120 and 130 discussed in Figure 1. In this embodiment, the RF communication subsystem infrastructure 130 may be implemented utilizing the network 210 of a wireless wideband service provider such as, but not limited to an LTE or 5G cellular network. In one such embodiment, the vehicle 150 may establish the wireless RF communication link 132 via a cellular antenna 212 coupled to the wireless wideband service provider's network 210. The wireless wideband service provider's network 210 may comprise one or more cellular base stations, backhaul links and related equipment to facilitate communications between the vehicle 150 and the vehicle traffic control system 140 via the core network of the wideband service provider. In some embodiments the vehicle traffic control system 140 may be coupled either directly or indirectly to the wireless wideband service provider network 210 by an RF communications subsystem interface 214 (for example, a gateway server, a modem, or the like).

As shown in Figure 2, the laser communication subsystem infrastructure 120 may be implemented utilizing a plurality of laser transceiver nodes 220 mounted to various mounting structures 205 along the vehicle routes (for example, the flyways used by air vehicles) established within the area serviced by the communications network 110. The plurality of laser transceiver nodes 220 blanket the vehicle routes with laser beams so that the vehicle 150 is substantially travelling in the line of sight of lasers from one or more of the laser transceiver nodes 220. Through the laser transceiver nodes 220, the laser communication subsystem infrastructure 120 thus maintains connectivity with the vehicle 150 throughout its travel (just as RF communications is maintained) but is not affected by interference from RF interference sources. In some embodiments, multiple simultaneous wireless laser communication links may be established between the vehicle and more than one of the plurality of nodes 220.

The two diverse communication subsystems 120 and 130 thus each augment the communications connectivity provided by the other. In the particular embodiment shown in Figure 2, the laser transceiver nodes 220 are each in communication with the vehicle traffic control system 140. In some embodiments, the laser transceiver nodes 220 each are coupled to a laser communications subsystem interface 224 and the vehicle traffic control system 140 communicates with the laser communications subsystem interface 224 to exchange vehicle control information with the vehicle 150 through the laser communication subsystem infrastructure 120. In other implementations, other networks (not shown) may carry vehicle control information between the laser communications subsystem interface 224 and the vehicle traffic control system 140, or between the laser communications subsystem interface 224 and the plurality of laser transceiver nodes 220.

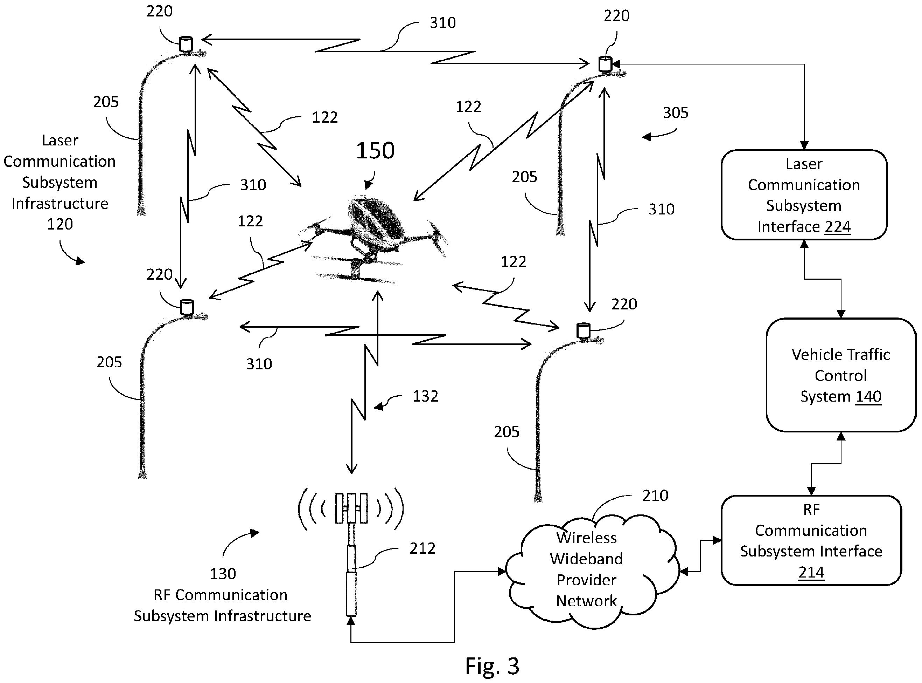

Figure 3 is a diagram illustrating a possible alternative communications network 110 implementation where the plurality of laser transceiver nodes 220 are in communication with each other using lasers, in addition to the vehicle 150. In other words, the plurality of laser transceiver nodes 220 form a mesh network 305 where the laser transceiver nodes 220 each self-configure to establish a laser mesh communication links 310 with one or more others of the laser transceiver nodes 220 such that nodes serve as relay stations that transport vehicle control information between the nodes. The mesh network 305 may be coupled to the vehicle traffic control system 140 by one (or more) of the laser transceiver nodes 220 (as shown at 320). This connection from that node may be implemented through a laser communications subsystem interface 224 and/or other networks in the same manner as discussed above. In some embodiments, should one or more of the plurality of laser transceiver nodes 220 fall out-of-service, the plurality of laser transceiver nodes 220 of the mesh network 305 will reconfigure to bypass the out-of-service node and re-establish a communications path between the vehicle 150 and vehicle traffic control system 140.

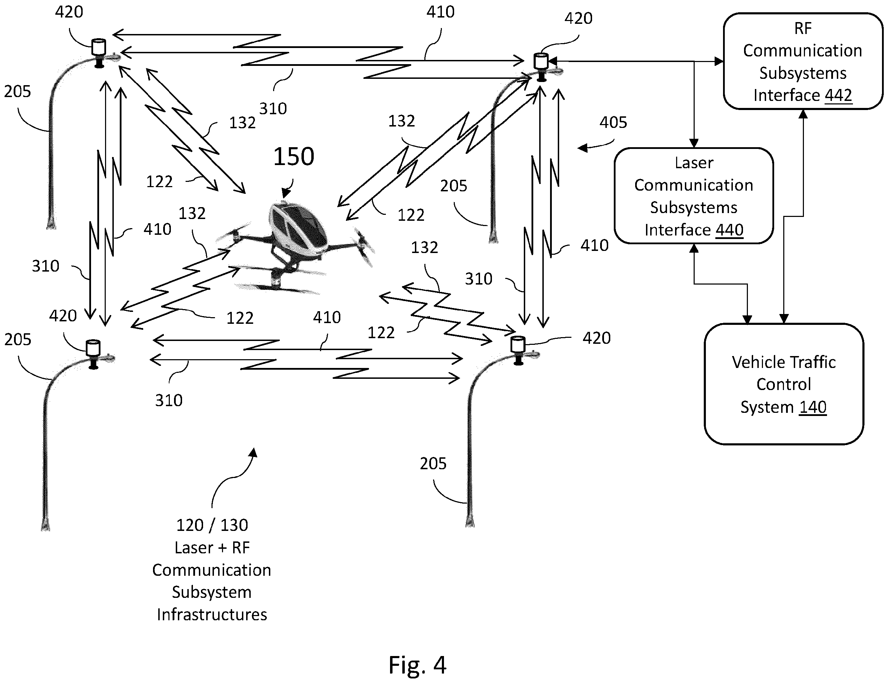

Figure 4 is a diagram illustrating another possible alternative communications network 110 implementation comprising a mesh network 405 that supports both RF and laser communications with the vehicle 150. In the same manner as describe with Figure 3, mesh network nodes 420 establish the laser communication subsystem infrastructure 120 utilizing laser transceiver nodes 220 to establish laser mesh communication links 310 that relay information between the nodes 420. The nodes 420 establish one or more laser communication links 122 with the vehicle 150, and transport vehicle control information between the vehicle 150 and the vehicle traffic control system 140. In this embodiment, the mesh network nodes 420 additionally operate as RF transceiver nodes that communicate with each other over RF mesh communication links 410 to implement the Radio Frequency Communication Subsystem Infrastructure 130. In some embodiments, the nodes 420 comprise RF access points or other RF electronics to establish the one or more RF communication links 132 with the vehicle 150, and to transport vehicle control information between the vehicle 150 and the vehicle traffic control system 140.

The mesh network 405 may be coupled to the vehicle traffic control system 140 by one (or more) of the mesh network nodes 420 (as shown at 450). A connection from those nodes to the vehicle traffic control system 140 can be implemented, for example, through separate RF and laser communication subsystem interfaces 440 and 442 as shown in Figure 4. Alternatively, the RF and laser communication subsystem interfaces 440 and 442 may be combined or otherwise integrated with each other. In some embodiments, RF communication of vehicle traffic control information may be primarily performed through a wireless wideband provider network 210, as illustrated in Figures 2 or 3, while the mesh network 405 is used to provide RF communications of vehicle traffic control in a backup capacity. Conversely, in other embodiments, RF communication of vehicle traffic control information may be primarily performed through the mesh network 405 and a wireless wideband provider network 210, as illustrated in Figures 2 or 3, used to provide RF communications of vehicle traffic control in a backup capacity.

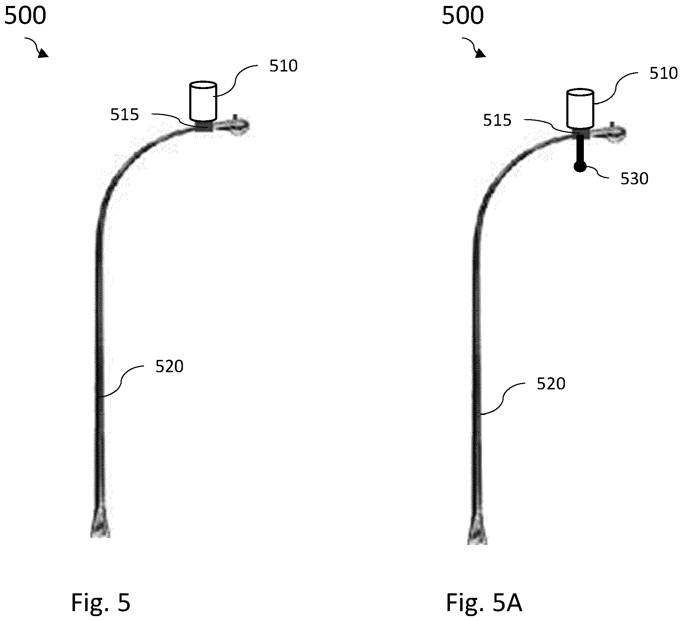

Figure 5 is a diagram illustrating an example embodiment of a communications node 500 for use with the communications network 110 of any of the embodiments described above. In some embodiments, the communications node 500 comprises at least one laser communications transceiver 510 that performs the functions as a laser transceiver node 220 discussed above. The laser communications transceiver 510 transmits and receives laser light signals to establish wireless laser communications links 122 with the vehicle 150. In some embodiments, the laser communications transceiver 510 also transmits and receives laser light signals to establish the laser mesh communication links 310 with one or more other communications nodes 500 in order to form the mesh networks 305 or 405 discussed above. In some embodiments, each laser communications transceiver 510 may comprise a plurality of laser light transmitters and receivers in order to establish the laser communication links described herein. Each communications node 500 may also include circuitry for modulating and demodulating vehicle traffic control information transported by the laser communication links for communicating vehicle traffic control information with the vehicle traffic control system 140.

As discussed above, a plurality of communications nodes 500 can be distributed along established vehicle transportation routes, secured onto physical mounting structures such as, but not limited to buildings, towers, signage, utility poles, traffic lights, lamp posts, and so forth. As such, although Figure 5 illustrates a communication node 500 comprising a laser communications transceiver 510 securely mounted to a mounting structure 520 that is shown a being a lamp post, the utilization of a lamp post as the mounting structure 520 is for example purposes only. In some embodiments, the communications nodes 500 may be locally powered from an electrical power source available from the mounting structure 520. For example, in the case of the mounting structure 520 that is a lamp post, the electric power for the lamp post may be tapped for powering the communications node 500. Similarly, in the case of the mounting structure 520 that is billboard or other illuminated signage, already existing electric power may be tapped for powering the communications node 500. Communications nodes 500 configured to couple the communication network 110 to the vehicle traffic control system 140 may include an interface 515 to connect to communications mediums such as metallic wire cables, fiber-optic connections or wireless communications, to communicate with the vehicle traffic control system 140.

As shown in Figure 5A, communications node 500 may further include RF transceiver circuitry 530 that comprises the electronic components, including RF transmitters and receivers, amplifiers, antennas and associated signal processing circuits to establish the wireless RF communication link 132 with the vehicle 150 and/or RF mesh communication links 410 as discussed for any of the embodiments described above. In such an embodiment, a communications node 500 having both the laser communications transceiver 510 and RF transceiver circuitry 530 are securely mounted to the mounting structure 520. In some embodiments, the RF transceiver circuitry 530 may also be locally powered from an electrical power source available from the mounting structure 520. It should also be understood that for any particular implementation of communication network 110, some communications nodes 500 may include just the laser communications transceiver 510 and not RF transceiver circuitry 530, some communications nodes 500 may include RF transceiver circuitry 530 but not a laser communications transceiver 510, and other communications nodes 500 may include both a laser communications transceiver 510 and RF transceiver circuitry 530.

In some embodiments, laser communications transceiver 510 or other element of a laser transceiver node 220 may comprise or have integrated therein a LIDAR ranging system that determines the distance to a vehicle 150 by targeting the vehicle 150 with laser light and measuring the returning light reflected from the vehicle 150 with a sensor. Given the known position of the laser transceiver node 220, the angle at which the laser light was transmitted, and the time that elapsed from transmitting the laser light to receive the returning light reflected from the vehicle 150, the position of the vehicle 150 can be calculated (for example, by a processor of the LIDAR ranging system). Using another technique, the return of laser light beams transmitted from two laser transceiver node 220 that both are reflected back from the same vehicle 150 may be used to calculate a point of intersection that indicates the position of the vehicle. In either case, the determined position may be communicated to the vehicle traffic control system 140, to the vehicle 150, or to other vehicles in the proximity of the vehicle 150. Using such ground based LIDAR would eliminate the need of putting LIDAR systems on each vehicle 150, thus eliminating from the vehicle 150 the corresponding size, weight and power costs associated with a LIDAR system.

The integration of LIDAR into laser transceiver nodes 220 would also simplify LIDAR waveform coding assignments. That is, laser transceiver nodes 220 implementing a LIDAR system in close proximity to each other would apply different waveform coding in order to avoid confusion when the LIDAR system of one laser transceiver nodes 220 inadvertently receives a laser beam (whether direct or reflected) originating from another laser transceiver node 220. The waveform coding permits the LIDAR system of a laser transceiver nodes 220 to distinguish reflections of its own laser transmissions. By having the LIDAR systems operating from stationary positions rather than from the many vehicles travelling within the system, the need to ensure that each vehicle's LIDAR is using different waveform coding from others in its proximity at any particular point in time, is eliminated.

Moreover, integration of LIDAR systems into the laser transceiver nodes 220 of the laser communication subsystem infrastructure 120 itself may provide "see around the corner" capability by communicating to a vehicle 150 the position of a second moving vehicle that are not within its own line of sight. For example the second vehicle may be around the corner of a building that blocks the view of the first vehicle 150. In such a case, the LIDAR systems of a laser transceiver node 220 along the path traveled by the second moving vehicle can report the detected position of the second moving vehicle to the vehicle traffic control system 140, which can disseminate that information to the first vehicle 150. In this way very high density vehicle traffic can be managed. In some embodiments, a camera 540 may also be installed onto the mounting structures 520 to similarly provide "see around the corner" capability.

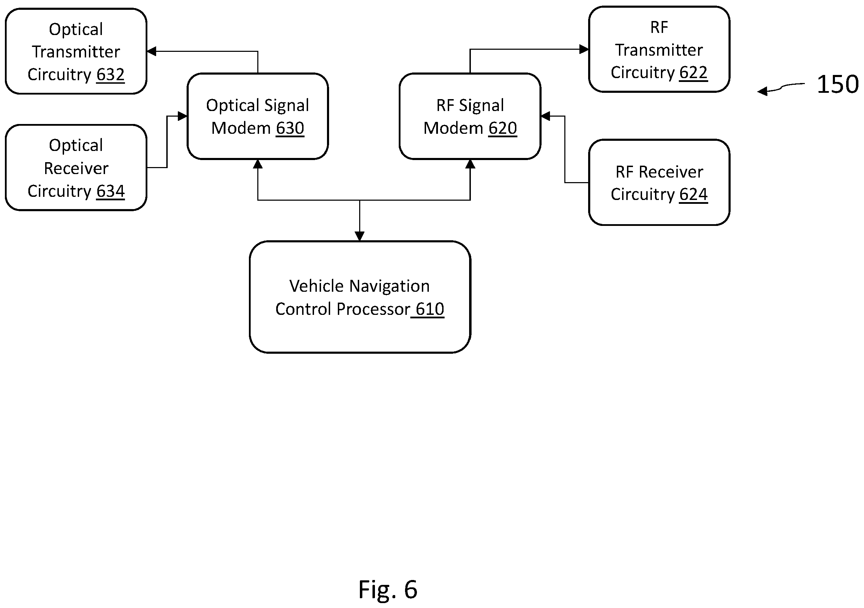

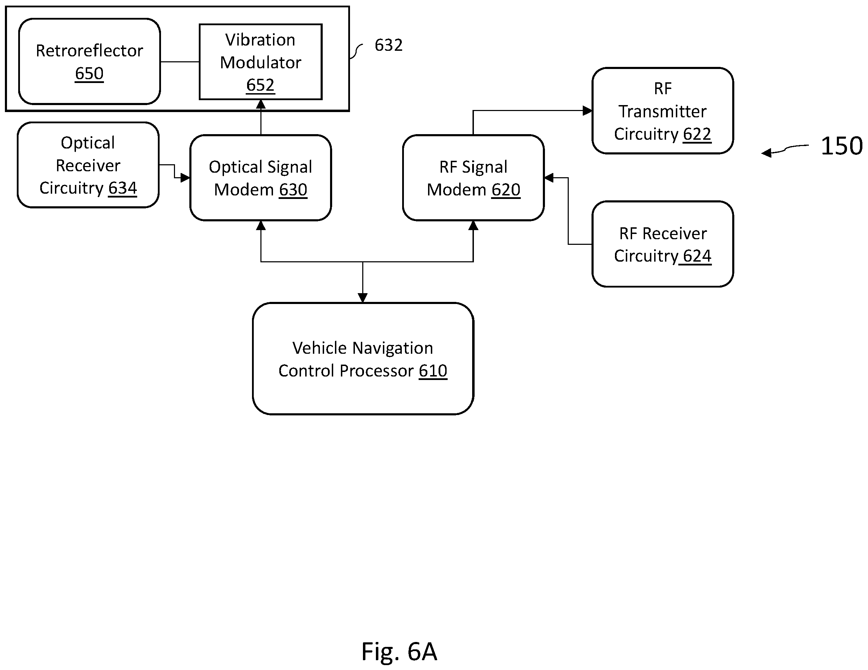

Figures 6 and 6A are each diagrams illustrating a vehicle 150 of one embodiments of the present disclosure. Although vehicle 150 is illustrated as being an air vehicle, it should be understood that for any embodiment or implementation disclosed herein, the vehicle 150 be any form of air or ground based vehicle including, but not limited to any passenger or cargo carrying air vehicle, or passenger or cargo carrying ground vehicle, whose movements are coordinated with other vehicles via a vehicle traffic control system. Vehicle 150 includes and vehicle navigation control processor 610 programed to execute code that controls operations of the vehicle 150 in accordance with the vehicle traffic control information received from the vehicle traffic control system 140 via the laser communication subsystem infrastructure 120 and RF communication subsystem infrastructure 130, as described for any of the embodiments presented herein. In the embodiment of Figure 6, the vehicle 150 includes an RF signal modem 620 coupled to RF transmitter circuitry 622 and RF receiver circuitry 624 which establish the wireless RF communication links 132 between the vehicle 150 and the RF communication subsystem infrastructure 130. Vehicle 150 includes an optical signal modem 630 coupled to optical signal transmitter circuitry 632 (for example, a laser light transmitter) and optical signal receiver circuitry 634 (for example, an optical sensor) which establish the wireless laser communication links 122 between the vehicle 150 and the laser communication subsystem infrastructure 132. In some embodiments, instead of the optical transmitter circuitry 632 comprising a laser light transmitter, it may comprise a retroreflector 650 coupled to a vibration modulator 652 as shown in Figure 6A. An optical corner cube retroreflector or trihedral prism are examples of devices which may be used to implement retroreflector 650. Such devices may comprise three adjacent, mutually-orthogonal reflecting surface planes that are configured to reflect a received incident light beam back in the direction from which the incident light beam was received, independent of the orientation of the retroreflector 650. In other words, when a retroreflector 650 on a vehicle 150 receives a laser light beam transmitted from a node of the laser communication subsystem infrastructure 120, it will reflect that laser light beam back to that node. By using the vibration modulator 652 to vibrate or dither the retroreflector 650, the optical signal modem 630 can modulate information received from processor 610 onto the returning laser beam and thus provide the vehicle 150 with a bidirectional laser communications link while avoiding the need to have a laser light generator on-board vehicle 150.

### EXAMPLE EMBODIMENTS

Example 1 includes a vehicle traffic control communications system, the system comprising: a Radio Frequency, RF, communication subsystem infrastructure configured to communicate vehicle traffic control information between a vehicle and a vehicle traffic control system via at least one wireless RF communication link established between the RF communication subsystem infrastructure and the vehicle; and a laser communication subsystem infrastructure configured to communicate the vehicle traffic control information between the vehicle and the vehicle traffic control system via at least one wireless laser communication link established between the laser communication subsystem infrastructure and the vehicle, wherein laser communication subsystem infrastructure comprise a first plurality of nodes secured onto physical mounting structures distributed along a vehicle route between a departure point and a destination point for the vehicle.

Example 2 includes the system of example 1, wherein the RF communication subsystem infrastructure and the laser communication subsystem infrastructure define components of a communications network for an Urban Air Mobility (UAM) transportation system.

Example 3 includes the system of example 2, wherein the vehicle comprises an air vehicle and the vehicle route defines a flyway within an area serviced by the communications network.

Example 4 includes the system of any of examples 1-3, wherein the RF communication subsystem infrastructure establish the at least one wireless RF communication link with the vehicle utilizing a wireless wideband communications provider network.

Example 5 includes the system of example 4, wherein the wireless wideband communications provider network comprises a 5G or Long-Term Evolution (LTE) cellular communications network.

Example 6 includes the system of any of examples 1-5, wherein the laser communication subsystem infrastructure comprises a laser mesh network communicatively coupling the first plurality of nodes to each other.

Example 7 includes the system of example 6, wherein the at least one wireless laser communication link established between the laser communication subsystem infrastructure and the vehicle comprises multiple simultaneous wireless laser communication links between the vehicle and more than one of the plurality of nodes.

Example 8 includes the system of any of examples 1-7, wherein the RF communication subsystem infrastructure comprises a second plurality of nodes secured onto the physical mounting structures distributed along the vehicle route between the departure point and the destination point for the vehicle.

Example 9 includes the system of example 8, wherein one or more of the first plurality of nodes of the laser communication subsystem infrastructure comprise at least part of the second plurality of nodes of the RF communication subsystem infrastructure.

Example 10 includes the system of any of examples 8-9, wherein the RF communication subsystem infrastructure comprises an RF mesh network communicatively coupling the second plurality of nodes to each other.

Example 11 includes the system of any of examples 1-10, wherein the vehicle traffic control information comprises information for dynamically coordinate timing of vehicle departures from designated departure points, timing of vehicle arrivals at designated destination points, and the routing of vehicles between the designated departure points and designated destination points.

Example 12 includes the system of any of examples 1-11, wherein one or more of the first plurality of nodes of the laser communication subsystem infrastructure further comprise a LIDAR ranging system configured to determine a position of the vehicle.

Example 13 includes the system of example 12, wherein the position of the vehicle is communicated to at least one of: the vehicle traffic control system; the vehicle; or another vehicle.

Example 14 includes the system of any of examples 1-13, wherein at least one wireless laser communication link established between the laser communication subsystem infrastructure and the vehicle comprises a return laser signal reflected from a retroreflector on the vehicle, wherein the return laser signal comprises information modulated onto the return laser signal from vibration of the retroreflector.

Example 15 includes the system of examples 14, wherein the retroreflector comprises a corner cube.

Example 16 includes a method for communicating vehicle traffic control information with a vehicle, the method comprising: communicating vehicle traffic control information between a vehicle and a vehicle traffic control system via at least one wireless RF communication link established between an RF communication subsystem infrastructure and the vehicle; communicating the vehicle traffic control information between the vehicle and the vehicle traffic control system via at least one wireless laser communication link established between a laser communication subsystem infrastructure and the vehicle, wherein laser communication subsystem infrastructure comprise a first plurality of nodes secured onto physical mounting structures distributed along a vehicle route between a departure point and a destination point for the vehicle.

Example 17 includes the method of example 16, wherein the RF communication subsystem infrastructure and the laser communication subsystem infrastructure define components of a communications network for an Urban Air Mobility (UAM) transportation system; wherein the vehicle comprises an air vehicle and the vehicle route defines a flyway within an area serviced by the communications network.

Example 18 includes the method of example 17, wherein the RF communication subsystem infrastructure established the at least one wireless RF communication link with the vehicle utilizing a wireless wideband communications provider network.

Example 19 includes the method of any of examples 16-18, wherein the laser communication subsystem infrastructure comprises a laser mesh network communicatively coupling the first plurality of nodes to each other; wherein the RF communication subsystem infrastructure comprises a second plurality of nodes secured onto the physical mounting structures distributed along the vehicle route between the departure point and the destination point for the vehicle; wherein the RF communication subsystem infrastructure comprises an RF mesh network communicatively coupling the second plurality of nodes to each other.

Example 20 includes the method of example 19, wherein one or more of the first plurality of nodes of the laser communication subsystem infrastructure further comprise a LIDAR ranging system configured to determine a position of the vehicle.

In various alternative embodiments, system and/or device elements, method steps, or example implementations described throughout this disclosure (such as any of the Radio Frequency communication subsystem infrastructure, vehicle traffic control system, laser communication subsystem infrastructure, wireless wideband communications provider network, communication nodes, laser communications transceiver, include RF transceiver circuitry, optical signal modem, RF signal modem, RF transmitter circuity, RF receiver circuitry, optical transmitter circuitry, optical receiver circuitry, vehicle navigation control processor, vibration modulator, or any controllers, processors, circuits, or sub-parts thereof, for example) may be implemented at least in part using one or more computer systems, field programmable gate arrays (FPGAs), or similar devices comprising a processor coupled to a memory and executing code to realize those elements, processes, or examples, said code stored on a non-transient hardware data storage device. Therefore, other embodiments of the present disclosure may include elements comprising program instructions resident on computer readable media which when implemented by such computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

As used herein, terms such as radio frequency communication subsystem infrastructure, vehicle traffic control system, laser communication subsystem infrastructure, wireless wideband communications provider network, communication nodes, laser communications transceiver, include RF transceiver circuitry, optical signal modem, RF signal modem, RF transmitter circuity, RF receiver circuitry, optical transmitter circuitry, optical receiver circuitry, vehicle navigation control processor, vibration modulator, retroreflector, refer to the names of elements that would be understood by those of skill in the arts of avionics, transportation industries and communications.

## Claims

1. A vehicle traffic control communications system (100), the system (100) comprising:
a Radio Frequency, RF, communication subsystem infrastructure (130) configured to communicate vehicle traffic control information between a vehicle (150) and a vehicle traffic control system (140) via at least one wireless RF communication link (132) established between the RF communication subsystem infrastructure (130) and the vehicle (150); and
a laser communication subsystem infrastructure (120) configured to communicate the vehicle traffic control information between the vehicle (150) and the vehicle traffic control system (140) via at least one wireless laser communication link (122) established between the laser communication subsystem infrastructure (120) and the vehicle (150), wherein laser communication subsystem infrastructure (120) comprise a first plurality of nodes (220) secured onto physical mounting structures (205) distributed along a vehicle route between a departure point and a destination point for the vehicle (150);
wherein the laser communication subsystem infrastructure (120) comprises a laser mesh network (405) communicatively coupling the first plurality of nodes (220) to each other.

2. The system (100) of claim 1, wherein the RF communication subsystem infrastructure (130) and the laser communication subsystem infrastructure (120) define components of a communications network (110) for an Urban Air Mobility (UAM) transportation system.

3. The system (100) of claim 1, wherein the RF communication subsystem infrastructure (130) comprises a second plurality of nodes (220) secured onto the physical mounting structures (205) distributed along the vehicle route between the departure point and the destination point for the vehicle (150).

4. The system (100) of claim 3, wherein the RF communication subsystem infrastructure (130) comprises an RF mesh network (405) communicatively coupling the second plurality of nodes (220) to each other.

5. The system (100) of claim 1, wherein the vehicle traffic control information comprises information for dynamically coordinate timing of vehicle departures from designated departure points, timing of vehicle arrivals at designated destination points, and the routing of vehicles between the designated departure points and designated destination points.

6. The system (100) of claim 1, wherein at least one wireless laser communication link (122) established between the laser communication subsystem infrastructure (120) and the vehicle (150) comprises a return laser signal reflected from a retroreflector (650) on the vehicle (150), wherein the return laser signal comprises information modulated onto the return laser signal from vibration of the retroreflector (650).

7. A method for communicating vehicle traffic control information with a vehicle (150), the method comprising:
communicating vehicle traffic control information between a vehicle (150) and a vehicle traffic control system (140) via at least one wireless RF communication link (132) established between an RF communication subsystem infrastructure (130) and the vehicle (150); and
communicating the vehicle traffic control information between the vehicle (150) and the vehicle traffic control system (100) via at least one wireless laser communication link (122) established between a laser communication subsystem infrastructure (120) and the vehicle (150), wherein laser communication subsystem infrastructure (120) comprise a first plurality of nodes (220) secured onto physical mounting structures (205) distributed along a vehicle route between a departure point and a destination point for the vehicle (150);
wherein the laser communication subsystem infrastructure (120) comprises a laser mesh network (405) communicatively coupling the first plurality of nodes (220) to each other.

8. The method of claim 7, wherein the RF communication subsystem infrastructure (130) and the laser communication subsystem infrastructure (120) define components of a communications network (110) for an Urban Air Mobility (UAM) transportation system;
wherein the vehicle (150) comprises an air vehicle and the vehicle route defines a flyway within an area serviced by the communications network (110).

9. The method of claim 7, wherein the RF communication subsystem infrastructure (130) comprises a second plurality of nodes (220) secured onto the physical mounting structures (205) distributed along the vehicle route between the departure point and the destination point for the vehicle (150);
wherein the RF communication subsystem infrastructure (130) comprises an RF mesh network (405) communicatively coupling the second plurality of nodes (220) to each other.

## Patentansprüche

1. Fahrzeugverkehrssteuerungskommunikationssystem (100), wobei das System (100) umfasst:
eine Radiofrequenz, RF, -Kommunikations-Subsystem-Infrastruktur (130), die konfiguriert ist, um Fahrzeugverkehrssteuerungsinformationen zwischen einem Fahrzeug (150) und einem Fahrzeugverkehrssteuerungssystem (140) mittels mindestens einer drahtlosen RF-Kommunikationsverbindung (132) zu übermitteln, die zwischen der RF-Kommunikations-Subsystem-Infrastruktur (130) und dem Fahrzeug (150) aufgebaut wird; und
eine Laser-Kommunikations-Subsystem-Infrastruktur (120), die konfiguriert ist, um die Fahrzeugverkehrssteuerungsinformationen zwischen dem Fahrzeug (150) und dem Fahrzeugverkehrssteuerungssystem (140) mittels mindestens einer drahtlosen Laser-Kommunikationsverbindung (122) zu übermitteln, die zwischen der Laser-Kommunikations-Subsystem-Infrastruktur (120) und dem Fahrzeug (150) aufgebaut wird, wobei die Laser-Kommunikations-Subsystem-Infrastruktur (120) eine erste Vielzahl von Knoten (220) umfasst, die an physischen Montagestrukturen (205) befestigt sind, die entlang einer Fahrzeugroute zwischen einem Abfahrtspunkt und einem Zielpunkt für das Fahrzeug (150) verteilt sind;
wobei die Laser-Kommunikations-Subsystem-Infrastruktur (120) ein Laser-Mesh-Netz (405) umfasst, das die erste Vielzahl von Knoten (220) kommunikativ miteinander koppelt.

2. System (100) nach Anspruch 1, wobei die RF-Kommunikations-Subsystem-Infrastruktur (130) und die Laser-Kommunikations-Subsystem-Infrastruktur (120) Komponenten eines Kommunikationsnetzes (110) für ein urbanes Luftmobilitäts (UAM, Urban Air Mobility)-Transportsystem definieren.

3. System (100) nach Anspruch 1, wobei die RF-Kommunikations-Subsystem-Infrastruktur (130) eine zweite Vielzahl von Knoten (220) umfasst, die an den physischen Montagestrukturen (205) befestigt sind, die entlang der Fahrzeugroute zwischen dem Abfahrtspunkt und dem Zielpunkt für das Fahrzeug (150) verteilt sind.

4. System (100) nach Anspruch 3, wobei die RF-Kommunikations-Subsystem-Infrastruktur (130) ein RF-Mesh-Netzwerk (405) umfasst, das die zweite Vielzahl von Knoten (220) kommunikativ miteinander koppelt.

5. System (100) nach Anspruch 1, wobei die Fahrzeugverkehrssteuerungsinformationen Informationen zum dynamischen Koordinieren des Zeitpunkts der Abfahrt von Fahrzeugen von festgelegten Abfahrtspunkten, des Zeitpunkts der Ankunft von Fahrzeugen an festgelegten Zielpunkten und der Routenführung von Fahrzeugen zwischen den festgelegten Abfahrtspunkten und den festgelegten Zielpunkten umfassen.

6. System (100) nach Anspruch 1, wobei mindestens eine drahtlose Laser-Kommunikationsverbindung (122), die zwischen der Laser-Kommunikations-Subsystem-Infrastruktur (120) und dem Fahrzeug (150) aufgebaut wird, ein von einem Retroreflektor (650) auf dem Fahrzeug (150) reflektiertes Laser-Rücksignal, wobei das Laser-Rücksignal Informationen umfasst, die durch Vibration des Retroreflektors (650) auf das Laser-Rücksignal moduliert werden.

7. Verfahren zum Übermitteln von Fahrzeugverkehrssteuerungsinformationen an ein Fahrzeug (150), wobei das Verfahren umfasst:
Übermitteln von Fahrzeugverkehrssteuerungsinformationen zwischen einem Fahrzeug (150) und einem Fahrzeugverkehrssteuerungssystem (140) mittels mindestens einer drahtlosen RF-Kommunikationsverbindung (132), die zwischen einer RF-Kommunikations-Subsystem-Infrastruktur (130) und dem Fahrzeug (150) aufgebaut wird; und
Übermitteln der Fahrzeugverkehrssteuerungsinformationen zwischen dem Fahrzeug (150) und dem Fahrzeugverkehrssteuerungssystem (100) mittels mindestens einer drahtlosen Laser-Kommunikationsverbindung (122), die zwischen einer Laser-Kommunikations-Subsystem-Infrastruktur (120) und dem Fahrzeug (150) aufgebaut wird, wobei die Laser-Kommunikations-Subsystem-Infrastruktur (120) eine erste Vielzahl von Knoten (220) umfasst, die an physischen Montagestrukturen (205) befestigt sind, die entlang einer Fahrzeugroute zwischen einem Abfahrtspunkt und einem Zielpunkt für das Fahrzeug (150) verteilt sind;
wobei die Laser-Kommunikations-Subsystem-Infrastruktur (120) ein Laser-Mesh-Netz (405) umfasst, das die erste Vielzahl von Knoten (220) kommunikativ miteinander koppelt.

8. Verfahren nach Anspruch 7, wobei die RF-Kommunikations-Subsystem-Infrastruktur (130) und die Laser-Kommunikations-Subsystem-Infrastruktur (120) Komponenten eines Kommunikationsnetzes (110) für ein urbanes Luftmobilitäts (UAM, Urban Air Mobility)-Transportsystem definieren;
wobei das Fahrzeug (150) ein Luftfahrzeug umfasst und die Fahrzeugroute einen Flugweg innerhalb eines vom Kommunikationsnetz (110) bedienten Gebiets definiert.

9. Verfahren nach Anspruch 7, wobei die RF-Kommunikations-Subsystem-Infrastruktur (130) eine zweite Vielzahl von Knoten (220) umfasst, die an den physischen Montagestrukturen (205) befestigt sind, die entlang der Fahrzeugroute zwischen dem Abfahrtspunkt und dem Zielpunkt für das Fahrzeug (150) verteilt sind;
wobei die RF-Kommunikations-Subsystem-Infrastruktur (130) ein RF-Mesh-Netzwerk (405) umfasst, das die zweite Vielzahl von Knoten (220) kommunikativ miteinander koppelt.

## Revendications

1. Système (100) de communication de la régulation de la circulation de véhicules, le système (100) comprenant :
une infrastructure de sous-système de communication radiofréquence, RF, (130) configurée pour communiquer des informations de régulation de la circulation de véhicules entre un véhicule (150) et un système de régulation de la circulation de véhicules (140) via au moins une liaison de communication RF sans fil (132) établie entre l'infrastructure de sous-système de communication RF (130) et le véhicule (150) ; et
une infrastructure de sous-système de communication laser (120) configurée pour communiquer les informations de régulation de la circulation de véhicules entre le véhicule (150) et le système de régulation de la circulation de véhicules (140) via au moins une liaison de communication laser sans fil (122) établie entre l'infrastructure du sous-système de communication laser (120) et le véhicule (150), dans lequel l'infrastructure de sous-système de communication laser (120) comprend une première pluralité de noeuds (220) fixés sur des structures de montage physiques (205) réparties le long d'un itinéraire de véhicule entre un point de départ et un point de destination pour le véhicule (150) ;
dans lequel l'infrastructure de sous-système de communication laser (120) comprend un réseau maillé laser (405) couplant en communication la première pluralité de noeuds (220) les uns aux autres.

2. Système (100) selon la revendication 1, dans lequel l'infrastructure de sous-système de communication RF (130) et l'infrastructure de sous-système de communication laser (120) définissent des composants d'un réseau de communication (110) pour un système de transport Urban Air Mobility (UAM, mobilité aérienne en milieu urbain).

3. Système (100) selon la revendication 1, dans lequel l'infrastructure de sous-système de communication RF (130) comprend une seconde pluralité de noeuds (220) fixés sur les structures de montage physiques (205) réparties le long de l'itinéraire de véhicule entre le point de départ et le point de destination pour le véhicule (150).

4. Système (100) selon la revendication 3, dans lequel l'infrastructure de sous-système de communication RF (130) comprend un réseau maillé RF (405) couplant en communication la seconde pluralité de noeuds (220) les uns aux autres.

5. Système (100) selon la revendication 1, dans lequel les informations de régulation de la circulation de véhicules comprennent des informations pour coordonner dynamiquement la synchronisation des départs de véhicules à partir de points de départ désignés, la synchronisation des arrivées de véhicules à des points de destination désignés et l'itinéraire de véhicules entre les points de départ désignés et les points de destination désignés.

6. Système (100) selon la revendication 1, dans lequel au moins une liaison de communication laser sans fil (122) établie entre l'infrastructure de sous-système de communication laser (120) et le véhicule (150) comprend un signal laser de retour réfléchi par un rétroréflecteur (650) sur le véhicule (150), dans lequel le signal laser de retour comprend des informations modulées sur le signal laser de retour à partir de la vibration du rétroréflecteur (650).

7. Procédé pour communiquer des informations de régulation de la circulation de véhicules avec un véhicule (150), le procédé comprenant :
la communication d'informations de régulation de la circulation de véhicules entre un véhicule (150) et un système de régulation de la circulation de véhicules (140) via au moins une liaison de communication RF sans fil (132) établie entre une infrastructure de sous-système de communication RF (130) et le véhicule (150) ; et
la communication des informations de régulation de la circulation de véhicules entre le véhicule (150) et le système de régulation de la circulation de véhicules (100) via au moins une liaison de communication laser sans fil (122) établie entre une infrastructure de sous-système de communication laser (120) et le véhicule (150), dans lequel l'infrastructure de sous-système de communication laser (120) comprend une première pluralité de noeuds (220) fixés sur des structures de montage physiques (205) réparties le long d'un itinéraire de véhicule entre un point de départ et un point de destination pour le véhicule (150) ;
dans lequel l'infrastructure de sous-système de communication laser (120) comprend un réseau maillé laser (405) couplant en communication la première pluralité de noeuds (220) les uns aux autres.

8. Procédé selon la revendication 7, dans lequel l'infrastructure de sous-système de communication RF (130) et l'infrastructure de sous-système de communication laser (120) définissent des composants d'un réseau de communication (110) pour un système de transport Urban Air Mobility (UAM, mobilité aérienne en milieu urbain) ;
dans lequel le véhicule (150) comprend un véhicule aérien et l'itinéraire de véhicule définit un itinéraire de vol dans une zone desservie par le réseau de communication (110).

9. Procédé selon la revendication 7, dans lequel l'infrastructure de sous-système de communication RF (130) comprend une seconde pluralité de noeuds (220) fixés sur les structures de montage physiques (205) réparties le long de l'itinéraire de véhicule entre le point de départ et le point de destination pour le véhicule (150) ;
dans lequel l'infrastructure de sous-système de communication RF (130) comprend un réseau maillé RF (405) couplant en communication la seconde pluralité de noeuds (220) les uns aux autres.
